# EUROPÄISCHE PATENTSCHRIFT

(11) **EP 4 105 152 B1**
(45) Veröffentlichungstag und Bekanntmachung des Hinweises auf die Patenterteilung: **13.03.2024**
(21) Anmeldenummer: 22000144.0
(22) Anmeldetag: 31.05.2022
(51) Int. Cl.: B65G 47/31, B65G 59/02, B65G 47/64, B65G 47/71, B07C 3/00, B65G 47/46, B07C 5/36, B65G 60/00, B65G 15/14

(54) **VORRICHTUNG UND VERFAHREN ZUM GETRENNTEN STAPELN FALTBARER, VON EINEM STAPEL ENTNOMMENEN, KISTEN VOLLER UND HALBER GRÖSSE**
DEVICE AND METHOD FOR THE SEPARATE STACKING OF FOLDABLE BOXES OF FULL AND HALF SIZE REMOVED FROM A STACK
DISPOSITIF ET PROCÉDÉ D'EMPILAGE SÉPARÉ DES CAISSES PLIABLES DE PLEINE ET DEMI-TAILLE, PRELEVEES D'UNE PILE

(30) Priorität: 16.06.2021 IT 202100015698
(43) Veröffentlichungstag der Anmeldung: 21.12.2022
(73) Patentinhaber: Tanzer Maschinenbau Srl, 39011 Lana (BZ) (IT)
(72) Erfinder: Tanzer, Peter, I-39011 Lana (BZ) (IT); Mantinger, Martin, I-39010 Nals (BZ) (IT); Trogmann, Albrecht, I-39011 Lana (BZ) (IT); Gitterle, Christof, I-39020 Kastelbell Tschars (BZ) (IT)
(74) Vertreter: Oberosler, Ludwig

(56) Entgegenhaltungen:
- DE-A1- 19 860 387
- FR-A1- 2 807 009
- IT-A1- BZ20 100 019

## Beschreibung

### Beschreibung

Die Erfindung bezieht sich auf eine Vorrichtung und das entsprechende Verfahren zum getrennten Stapeln faltbarer Kisten voller und halber Größe (z.B. 600 x 400, beziehungsweise 400 x 300) aus Kunststoff, insbesondere von der Art welche häufig für den Transport von Obst und Gemüse verwendet werden, nach ihrer Entnahme von einem einzigen Stapel in welchem sie in zerstreuter Reihenfolge gestapelt sind.

In der Logistik der faltbaren Kisten ist es üblich, dass insbesondere die leeren Kisten voller und halber Größe in zusammengefaltetem Zustand, in zerstreuter Reihenfolge gestapelt, den Zentren für das Waschen, die Überprüfung und die Sortierung zugeführt werden. Die Wasch-, Überprüfungs- und Soirtierzentren setzen jedoch eine Zuführung von Stapel, in welchen die Kisten gleicher Größe gestapelt sind, voraus, auch wenn üblicherweise die Bearbeitungsmaschinen für die Bearbeitung der Kisten beider Größen programmierbar sind. Zur Zeit erfolgt die getrennte Stapelung der Kisten voller und halber Größe welche aus einem Stapel mit gemischter, zerstreuter Reihenfolge stammen, händisch oder mittels Anlagen deren Platzbedarf groß und deren Leistung gering ist; diese Anlagen nutzen Messsensoren oder Erhebungsvorrichtungen für, an den Kisten angebrachte, maschinenlesbare Markierungen oder Kodes, deren Zustand, infolge Verschleiß bzw. Verlust, zu fehlerhaften Erhebungen führt.

Aus der IT BZ20100019 A1 des selben Antragstellers ist eine Entstapelvorrichtung für Kisten bekannt welche auch das Entstapeln gemeinsam gestapelter Kisten voller und halber Größe vorsieht; diese Vorrichtung sieht jedoch nicht die Erkennung der unterschiedlichen Gößen der Kisten und somit deren getrennte, spezifische Stapelung nach Kistengröße vor. Die IT BZ20100019 A1 offenbart die Merkmale des Oberbegriffs der Ansprüche 1 und 8.

Aus der FR 2 807 009 A1 ist eine Vorrichtung zur Überprüfung des Alters faltbarer Kisten bekannt, diese Vorrichtung weist, nach mehreren horizontalen Transportrollen, einen Sensor einer Erhebungsvorrichtung auf welche indirekt das Quermaß der Kiste während deren Weiterförderung erhebt; die erhobenen Werte werden durch ein Programm analysiert und angezeigt. Diese Vorrichtung kann auch die Kisten voller und halber Größe erkennen, dabei wirkt die Vorrichtung auf jede einzelne Kiste. Diese Vorrichtung ist nicht für die die getrennte Stapelung von Kisten voller und halber Größe konzipiert.

Aus der DE 198 60 387 A1 ist eine Anlage zum Sortieren und Stapeln von flachen Gegenständen mit verschieden großen Grundflächen und/oder verschieden hohen Seitenwänden bekannt. Diese gemischt dimensionierten Gegenstände, wie z.B. Faltboxen, sind mit maschinenlesbaren Markierungen zur Erkennung der unterschiedlichen Dimensionen versehen. Die Markierungen werden in einem Förderer durch Lesemittel erhoben und mittels spezifischer Stapeleinheiten für jeweils eine Dimension gestapelt. Diese Anlage setzt die Ausstattung der zu stapelnden Gegenstände mit einer maschinenlesbaren Markierung voraus, erfahrungsgemäß sind solche Markierungen, an Mehrwegbehältern öfters beschädigt, verschmutzt oder verloren gegangen.

Die Erfindung stellt sich die Aufgabe eine Vorrichtung und das entsprechende Verfahren zum Trennen der, aus einem einzigen Stapel, entnommenen Kisten voller Größe von jenen halber Größe zu schaffen welche sich durch eine hohe Leistung, zuverlässigen Betrieb und wenig Platzbedarf auszeichnet.

Zur Lösung dieser Aufgabe schlägt die Erfindung eine Vorrichtung vor welche aus einer einzigen Entnahmestation mit Erkennung der Kisten halber und voller Größe besteht auf welche eine Transfer- und Umlenkvorrichtung für zwei spezifische bekannte Stapelvorrichtungen folgt und zwar eine für Kisten halber und eine für Kisten voller Größe.

Erfindungsgemäß erfolgt die Erkennung der Kisten halber Größe, nach deren Entnahme vom Stapel wo sie in gestreuter Reihenfolge, zusammen mit den Kisten voller Größe, gestapelt sind. Die Entnahme aller Kisten mit zusammengefalteten Seitenwänden erfolgt mittels einem Transportbänderpaar welches auf die entgegengesetzten Seitenränder der Kisten voller Größe, bzw. der Kisten halber Größe, welche oben auf dem Stapel liegen, Druck ausübt, wobei zuerst ein Abheben vom Stapel und anschließend ein Transport zu einer Transfer- und Umlenkvorrichtung erfolgt. Der vom Paar der seitlich greifenden Transportbänder bewirkte Transfer kann erfindungsgemäß auf zwei Arten erfolgen:
1) mit einer relativ hohen Geschwindigkeit über eine Transportstrecke welche etwas größer als die Breite der Kisten halber Größe ist, um anschließend plötzlich, für eine Strecke welche ca. der besagten Breite entspricht, verlangsamt zu werden;
2) mit einer relativ hohen Geschwindigkeit über eine Transportstrecke welche etwas größer als die Breite der Kisten halber Größe ist, um anschließend verlangsamt oder für eine kurze Zeit angehalten zu werden und anschließend wieder mit der anfänglichen hohen Geschwindigkeit über eine Strecke, entsprechend ca, der Breite der Kisten halber Größe, bewegt zu werden.

Beide besagten Arten des Transfers bewirken dass, im Fall zweier Kisten halber Größe welche beide zwischen den beiden Transportbändern gehalten werden, die erste Kiste welche sich näher der nachfolgenden Transfer- und Umlenkvorrichtung befindet, diese Vorrichtung erreicht indem sie die beiden seitlich wirkenden Transportbänder verlässt und, während die zweite Kiste mit reduzierter Geschwindigkeit, bzw. mit einer zur ersten Geschwindigkeit, infolge einer kurzen Verlangsamung oder einem Anhalten, mit wesentlich identischer Geschwindigkeit, zwischen den seitlichen Transportbändern bewegt wird, ein Abstand zwischen den beiden Kisten halber Größe erreicht wird.

Der besagte Abstand kann, unmittelbar nach den beiden Transportbändern, auf unterschiedliche Weise erhoben werden, z.B. mittels Lichtschranke, mittels selektivem Farberkennungssensor (unterschiedliche Farbe zwischen Kisten und dem darunter liegenden Förderband), mittels Kamera (Bilderkennung).

Die Funktionsweise der seitlich wirkenden Transportbänder ist auch für die Kisten voller Größe die selbe, natürlich kann das Erkennungssystem nach den Transportbändern, infolge des Transfers einer Kiste welche etwas größer als die Hälfte der Länge der Kiste voller Größe ist, keinen Abstand erheben.

Aufgrund der Erhebung der Präsenz von Kisten halber Größe welche durch die Beabstandung der Kisten während des Transports zur Transfer- und Umlenkvorrichtung erfolgt, kann diese so gesteuert werden dass die Kisten, je nach ihrer Größe, zwei getrennten spezifischen Stapelvorrichtungen, bzw. direkt spezifischen Bearbeitungsmaschinen, zugeführt werden. Erfindungsgemäß kann die Umlenkung vorteilhaft erfolgen indem das Förderband für die Kisten welche die Entnahmevorrichtung verlassen von der vertikal schwenkbaren Art ist. In diesem Fall können die Kisten einer Größe (z.B. halber Größe) auf bekannte Art in einer Position unterhalb des, für den Transport der Kisten der zweiten Größe (z.B. voller Größe), vorgesehenen Förderbandes, gestapelt werden, wobei diese einer spezifischen bekannten Stapelvorrichtung oder einer spezifischen Bearbeitungsmaschiene zugeführt werden, wodurch eine vorteilhafte Platznutzung erfolgt.

Die Erfindung schließt nicht aus, dass die Umlenkung der Kisten, auf bekannte Art, auf der Transfervorrichtung nach der Entnahmevorrichtung mittels seitlichem Schieber erfolgt, welcher seitlich in Richtung einer spezifischen bekannten Stapelvorrichtung wirkt welche seitlich der Transfervorrichtung vorgesehen ist.

Die Erhebung der Präsenz von Kisten halber Größe welche nach deren Entnahme angeordnet ist, ermöglicht auf einfache, schnelle und zuverlässige Weise die Vereinzelnung und die anschließende separate Stapelung, bzw. den direkten Transfer zu einer spezifischen Bearbeitungsmaschine, der beiden Kistenarten, wobei wenig Platz und Wartung erforderlich sind.

Die Erfindung wird anschließend, anhand eines in den beigelegten Zeichnungen schematisch dargestellten, vorzuziehenden Ausführungsbeispiels einer erfrindungsgemäßen Vorrichtung zum Sortieren und getrennten Stapeln von Kisten voller und halber Größe näher erklärt, dabei erfüllen die Zeichnungen rein erklärenden und nicht begrenzenden Zweck.

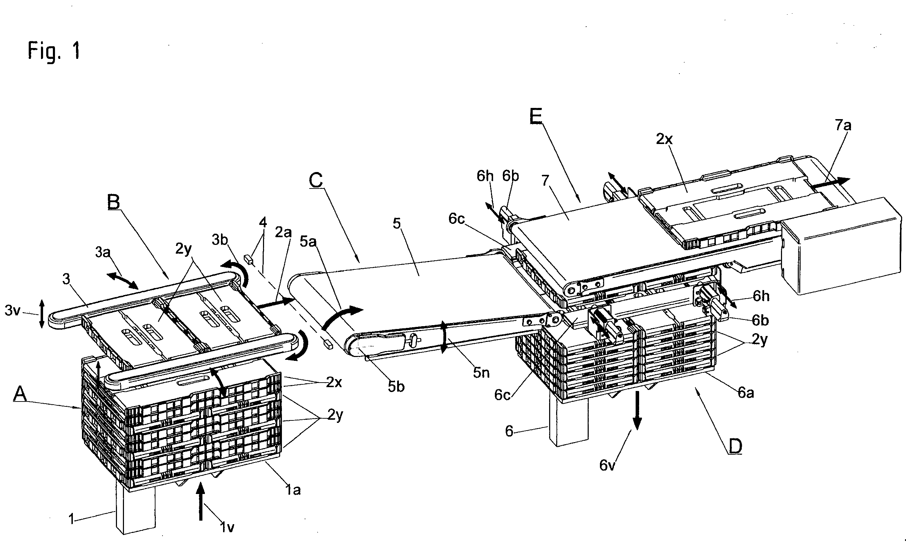

Fig. 1 zeigt eine perspektivische Sicht einer erfindungsgemäßen Vorrichtung zum Sortieren der Kisten mit Erhebung durch Lichtschranke der, in Entnahmefase unter sich distanzierten, Kisten halber Größe, mit Transfervorrichtung mit schwenkbarem Förderband für die Umlenkung der Kisten halber Größe zu einer bekannten Stapelvorrichtung welche unter dem Förderband angeordnet ist, bzw. für die Kisten voller Größe zu einer bekannten, nicht dargestellten Stapeleinrichtung oder direkt zu einer Bearbeitungsmaschine.

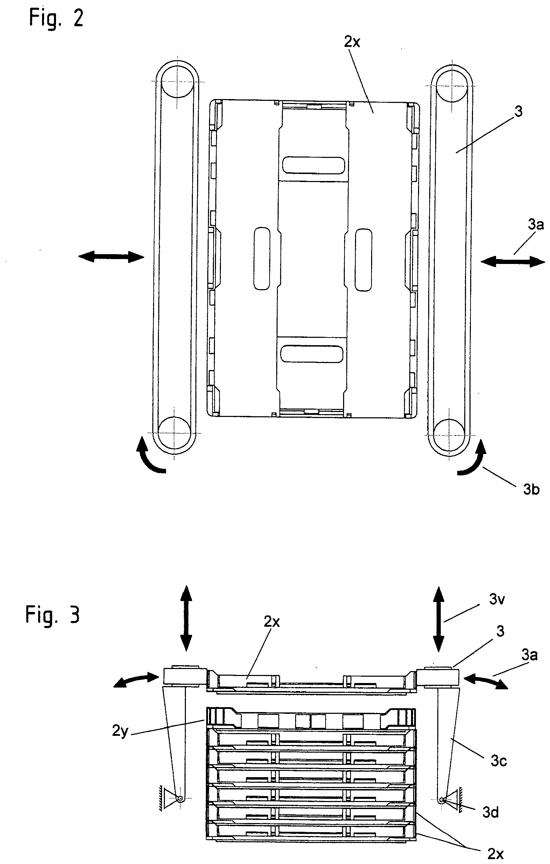

Fig. 2 zeigt eine Draufsicht auf die Entnahme- und Transferförderbänder bevor diese seitlich auf die Seitenränder einer Kiste voller Größe welche oben auf dem Stapel liegt wirkt.

Fig. 3 zeigt eine Vorderansicht auf die in zerstreuter Reihenfolge gestapelten Kisten und auf die beiden Entnahmeförderbänder in der Fase des Ergreifung der Seitenränder einer Kiste voller Größe und des folgenden Abhebens vom Stapel.

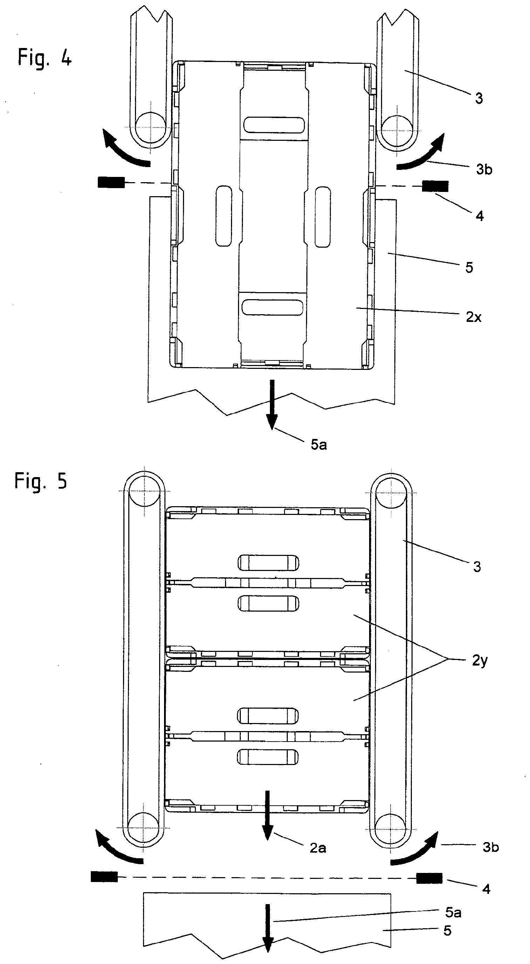

Fig. 4 zeigt eine Draufsicht auf den Endbereich der Entnahmeförderbänder und auf den Anfangsbereich des Transfer- und Umlenkförderbands während dem Durchlauf einer Kiste voller Größe.

Die Fig. 5 zeigt die Draufsicht auf zwei seitliche Entnahmeförderbänder welche eine Kiste halber Größe festhalten, auf den Anfangsbereich des folgenden Transfer- und Umlenkungsförderbandes und auf die Lichtschranke welche im Übergangsbereich von den seitlich wirkenden Entnahmeförderbändern zum Transfer- und Umlenkungsförderband angeordnet ist.

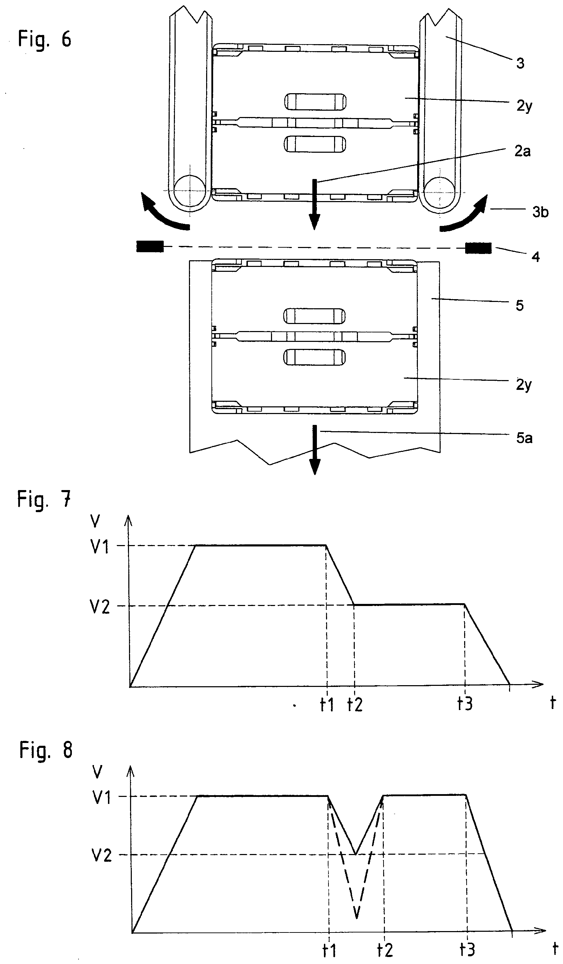

Die Fig. 6 zeigt eine Draufsicht auf den Endbereich des Paares der seitlichen Entnahmeförderbänder welche auf die zweite Kiste halber Größe wirken und auf den Anfangsbereich des Transfer- und Umlenkförderbands mit der darauf liegenden ersten Kiste halber Größe; die Lichtschranke erhebt die Beabstandung zwischen den beiden Kisten welche, infolge Verlangsamung der Transfergeschwindigkeit, bzw. durch eine kurze Verlangsamung oder ein kurzes Anhalten mit folgender Beschleunigung auf die Anfangsgeschwindigkeit, nach dem Erreichen des Transfer- und Umleitförderbandes, seitens der ersten Kiste, entstanden ist.

Die Fig. 7 zeig das Diagramm der Änderungen der Transfergeschwindigkeit welche von den zwei Entnahmeförderbändern, sei es an die Kisten halber als auch voller Größe, übertragen werden, mit einer, in Bezug auf die Endgeschwindigkeit, höheren Anfangsgeschwindigkeit.

Die Fig. 8 zeigt das Diagramm der Änderungen der Transfergeschwindigkeit welche von den zwei Entnahmeförderbändern, sei es an die Kisten halber als auch voller Größe übertragen werden, mit einer kurzen Absenkung oder einem Anhalten der Transfergeschwindigkeit.

Die Vorrichtung zum getrennten Stapeln von faltbaren Kisten voller und halber Größe welche von einem einzigen Stapel entnommen werden, besteht wesentlich aus:
- einer Entnahmestation A der Kisten 2x, 2y von einem einzigen Stapel welcher auf einer vertikal beweglichen Ladefläche 1a einer bekannten Entstapelvorrichtung abgelegt ist;
- einer Entnahme- und Transfervorrichtung B welche wesentlich aus zwei Entnahmeförderbänder 3 besteht welche seitlich auf die sich gegenüberliegenden Ränder der Kisten 2x, 2y wirken;
- einer Transfer- und Umlenkvorrichtung C welche aus einem vertikal schwenkbaren 5n Förderband 5 besteht;
- einer Transfervorrichtung E für die Beschickung einer bekannten Stapelvorrichtung für die Kisten voller Größe (nicht dargestellt), bzw. einer spezifischen Bearbeitungsmaschine;
- einer bekannten Stapelvorrichtung D für die Kisten halber Größe, welche vorzugsweise unter der Transfervorrichtung E angeordnet ist.

Die Kisten halber Größe 2y sind zusammen mit den Kisten voller Größe 2x gestapelt und bilden einen einzigen Stapel welcher auf der vertikal beweglichen Ladefläche 1a der bekannten Entstapelungsvorrichtung 1 abgelegt ist; es ist bekannt, dass die Kisten halber Größe paarweise abgelegt sind so dass sie im Stapel die identische Fläche der Kisten voller Größe 2x einnehmen, die Stärke beider Kistentypen kann identisch oder unterschiedlich sein.

Die Entnahme der Kisten 2x, 2y von der Oberseite des Stapels erfolgt in bekannter Weise durch zwei zueinander parallele angetriebene 3b Förderbänder 3 welche mittels Arme oder Struktur 3c an einer feststehenden Struktur oder am Rahmen der Entstapelungsvorrichtung schwenkbar 3a gelagert sind. Die Schwenkbewegung 3a der Bänder 3 wird z.B. durch Pneumatikzylinder oder durch servoelektrischen Antrieb erreicht. Infolge Klemmwirkung der beiden Bänder 3 seitlich an den Seitenrändern der Kiste 2x oder der Kisten 2y welche auf der Oberseite des Stapels liegen werden diese durch Druckausübung festgehalten.

Durch vertikales Anheben 3v der Bänder 3 wird die festgehaltene Kiste 2x oder werden die festgehaltenen Kisten 2y vom Stapel abgehoben um anschließend durch Antrieb 3b der Bänder 3 in Richtung Transfer- und Umlenkvorrichtung C bewegt.

Durch den besagten Antrieb 3b der Bänder 3 können die Kisten 2x, 2y wie folgt bewegt werden:
1) nach einer Beschleunigung, mit einer relativ hohen Geschwindigkeit V1 für eine Zeit t1 so dass, im Fall von Kisten halber Größe 2y die Übergabe der ersten Kiste an das Transportförderband 5 der Transfer- und Umlenkvorrichtung C erfolgt; sobald diese Übergabe der ersten Kiste 2y erfolgt ist, wird die Geschwindigkeit der Bänder 3, infolge einer Verlangsamung, auf eine Geschwindigkeit V2 für eine Zeit t3 - t2 erniedrigt, welche für die Abgabe der zweiten Kiste 2y an das Förderband 5 notwendig ist;
2) nach einer Beschleunigung, mit einer relativ hohen Geschwindigkeit V1 für eine Zeit t1 so dass, im Fall von Kisten 2y halber Größe die Übergabe der ersten Kiste an das Transportförderband 5 der Transfer- und Umlenkvorrichtung C erfolgt; sobald diese Übergabe der ersten Kiste 2y erfolgt ist, wird die Geschwindigkeit t2 - t1 für ein kurzes Intervall verlangsamt oder gestoppt um anschließend für eine Dauer von t3 - t2, welche für die Abgabe der zweiten Kiste 2y an das Förderband 5 erforderlich ist, die Anfangsgeschwindigkeit wieder aufzunehmen.

Der besagte Antrieb der Bänder 3 mit zwei unterschiedlichen Geschwindigkeiten V1, V2, bzw. mit einer kurzen Verlangsamung oder einem kurzem Anhalten der Geschwindigkeit V1, bewirkt, dass im Fall zweier Kisten halber Größe 2y, diese im Bereich der Übergabe, von den seitlich wirkenden Entnahmebändern 3 an das Förderband 5 der Transfer- und Umlenkvorrichtung C, beabstandet werden. Diese Beabstandung ermöglicht die Erhebung mittels Lichtschranke 4 zur Feststellung des Freiraums, mittels selektivem Farbsensor (Farbe der Kisten - Farbe des Förderbandes 5) oder mittels Kamera (Bilderkennung), dass es sich um die Präsenz von Kisten halber Größe handelt.

Vorteilhafterweise besteht die Transfer- und Umlenkvorrichtung C aus einem Förderband 5 welches um eine Lagerung 5b vertikal schwenkbar 5n ist so dass z.B. die Kisten 2y direkt einer bekannten Stapelvorrichtung D zugeführt werden können welche vorzugsweise unter der Transfervorrichtung E vorgesehen ist. Die besagte Transfervorrichtung hingegen dient zum Transfer 7a mittels Band 7, z.B. der Kisten 2x zu einer spezifischen bekannten Stapelvorrichtung (nicht dargestellt), bzw. zu einer spezifischen Bearbeitungsmaschine.

Die Erfindung schließt nicht aus, dass die unterschiedlichen Kisten 2x, 2y, infolge Verlassen der Entnahmeförderbänder 3, mittels bekannter Schieber welche mindestens eine Kistenart, aufgrund der Erhebung, von einem nicht schwenkbaren Förderband zu einer seitlich angeordneten spezifischen Stapelvorrichtung, umleiten.

Insbesonder die Stapelvorrichtung D für das Stapeln der Kisten 2y halber Größe weist, außer der vertikal beweglichen 6v Ladefläche 6a, im oberen Bereich zwei seitliche, mittels Zylinder 6b horizontal bewegliche 6h oder schwenkbare Auflagemensolen 6c auf welche geeignet sind um zwei vom Förderband 5 bewegte 5a Kisten 2y paarweise zu halten und anschließend regulär oben auf den Stapel abzulegen.

Das erfindungsgemäße Verfahren zum getrennten Stapeln faltbarer Kisten halber und voller Größe umfasst folgende Fasen:
- Ergreifen der Kisten 2x, 2y welche auf der Oberseite des Stapels liegen, durch Schwenken 3a der Entnahmeförderbänder 3 welche seitlich an den sich gegenüberliegenden Kistenrändern greifen;
- Abheben der Kisten 2x, 2y vom Stapel durch Anheben 3v der Entnahmeförderbänder 3;
- Transfer der Kisten 2x, 2y mittels der Bänder 3 mit einer ersten Geschwindigkeit V1 für eine Zeit t1 so dass die Übergabe der eventuellen ersten Kiste 2y halber Größe an die Transfer- und Umlenkvorrichtung C sichergestellt ist (Fig. 7);
- nach einer Verlangsamung für eine Dauer von t2 - t1, Weiterförderung der Kisten 2x, 2y mit einer zweiten Geschwindigkeit V2, welche niedriger als die erste V1 ist, für die Dauer einer Zeit t3 - t2 um, im Fall von Kisten 2y halber Größe, die Beabstandung zwischen der ersten, bereits an die anschließende Transfer- und Umlenkvorrichtung C abgegebenen, Kiste zu erreichen während die nachfolgende Kiste 2y noch zwischen den Entnahmeförderbändern 3 zurückgehalten wird (Fig. 7);
- Abgabe der zweiten Kiste 2y von den Entnahmeförderbändern 3 an das Förderband 5 der Transfer- und Umlenkvorrichtung C;
- Im Fall von Kisten 2y halber Größe, Erhebung des Abstandes zwischen den Kisten welche die Position zwischen den Entnahmeförderbändern 3 und der Transfer- und Umlenkvorrichtung C einnehmen, z. B. mittels Lichtschranke 4, mittels selektiver Farberkennungssonde oder mittels Kamera;
- in Abhängigkeit der Erhebung, Umlenkung der Kisten 2x, 2y zu separaten, spezifischen Stapelvorrichtungen D, bzw. zu einer spezifischen Bearbeitungsmaschine.

Die Erfindung schließt nicht aus, dass die besagte Beabstandung zwischen den Kisten 2y halber Größe dadurch erreicht wird, dass die Entnahmeförderbänder 3 mit einer relativ hohen Geschwindigkeit V1 für eine Zeitdauer t1 zwecks einer Förderung um das Maß der Breite der Kisten 2y halber Größe erfolgt, worauf für eine kurze Zeitdauer t2 - t1 eine Verlangsamung oder ein Stop der Geschwindigkeit V1 folgt, worauf wieder die Anfangsgeschwindigkeit V1 für eine Zeit t3 - t2 folgt welche für den Transport über eine Strecke gleich der Breite der Kisten halber Größe, erforderlich ist (Fig. 8).

## Patentansprüche

1. Vorrichtung zum getrennten Stapeln von faltbaren Kisten voller Größe (2x) und halber Größe (2y), wobei diese ein Paar Entnahmeförderbänder (3) zum Entnehmen der faltbaren Kisten voller Größe (2x) und halber Größe (2y) von der Oberseite eines einzigen Stapels umfasst, wobei das Paar der Entnahmeförderbänder schwenkbar (3a) gelagert ist um die Kisten (2x, 2y) zu ergreifen und vertikal von der Oberseite des Stapel abzuheben (3v) und weiters eine Transfer- und Umlenkvorrichtung (C) sowie eine Lichtschranke (4), einen Farberkennungssensor oder eine Kamera umfasst, wobei die zwischen den Entnahmeförderbändern (3) gegriffenen Kisten (2x, 2y), nach deren Abheben (3v), von den Entnahmeförderbändern (3) in Richtung der Transfer- und Umlenkvorrrichtung (C) bewegt (2a) werden,
**dadurch gekennzeichnet, dass**
die Vorrichtung so konfiguriert ist, dass die Bewegung (2a) mit einer ersten Geschwindigkeit (V1) für eine Zeit (t1) erfolgt welche erforderlich ist um eine Strecke gleich oder etwas größer als die kurze Seite einer Kiste halber Größe (2y) zurückzulegen, gefolgt von einer Bewegung mit einer Geschwindigkeit (V2) welche niedriger als die erste (V1) ist, um eine Strecke welche etwas größer als die kurze Seite einer Kiste halber Größe (2y) ist zurückzulegen, was infolge des Unterschiedes der Transportgeschwindigkeit, bei halbgroßen Kisten (2y), während der Übergabe an die Transfer- und Umlenkvorrichtung (C), eine Beabstandung zwischen den beiden Kisten (2y) bewirkt, welche mittels der Lichtschranke (4), mittels Farberkennungssensor oder mittels einer Kamera erkannt wird, welche die Transfer- und Umlenkvorrichtung (C) für die Bewegung (5a) der Kisten (2x, 2y) zu den spezifischen Stapelvorrichtungen, bzw. den spezifischen Bearbeitungsmaschinen, steuern.

2. Vorrichtung gemäß Anspruch 1, **dadurch gekennzeichnet dass**, um die Beabstandung zwischen den Kisten halber Größe (2y) zu erhalten, während der Übergabe vom Paar der Entnahmeförderbänder (3) an die folgende Transfer- und Umleitvorrichtung (C), die Geschwindigkeit (V1) des Transports (2a), nach einer Zeit (t1) welche für die Förderung um eine Strecke gleich oder etwas größer als die kurze Seite der Kiste halber Größe (2y) notwendig ist, für eine kurze Zeit verlangsamt oder gestoppt wird um anschließend, die Geschwindigkeit für eine Zeit (t3 - t2), welche für eine Transportstrecke knapp größer als die kurze Seite der Kisten halber Göße (2y) erforderlich ist.

3. Vorrichtung gemäß der Ansprüche 1 oder 2, **dadurch gekennzeichnet, dass** die Erhebung der Beabstandung zwischen zwei Kisten halber Größe (2y) unmittelbar nach dem Verlassen der Entnahmebänder (3), im Bereich der Übergabe von den Entnahmeförderbändern (3) an die folgende Transfer- und Umlenkvorrichtung (C) oder an das Förderband (5) oder an das Transportorgan der folgenden Transfer- und Umlenkvorrichtung (C) erfolgt.

4. Vorrichtung gemäß der Ansprüche 1 oder 2, **dadurch gekennzeichnet, dass** die Transfer- und Umlenkvorrichtung (C) aus einem, vertikal schwenkbaren (5n) Förderband (5) besteht um in einer Schwenkposition direkt eine der spezifischen Stapelvorrichtungen (D), bzw. eine spezifische Bearbeitungsmaschine, beschicken zu können und in der zweiten Schwenkposition, mittels einer weiteren Fördervorrichtung (E) die zweite spezifische Stapelvorrichtung, bzw. eine spezifische Bearbeitungsmaschine, beschicken zu können.

5. Vorrichtung gemäß der Ansprüche 1 oder 2 und 4, **dadurch gekennzeichnet dass** die spezifische Stapelvorrichtung (D) welche direkt von der Transfer- und Umlenklvorrichtung (C) beschickt wird, unter der Transfervorrichtung (E) für die Beschickung der zweiten spezifischen Stapelvorrichtung, vorgesehen ist.

6. Vorrichtung gemäß der Ansprüche 1 oder 2, **dadurch gekennzeichnet, dass** die Transfer- und Umlenkvorrichtung (C) aus einem Band oderTransferorgan mit mindestens einem seitlichen Schieber für das seitliche Wegschieben mindestens einer Typologie der Kisten (2x, 2y) zu einer spezifischen bekannten Stapelvorrichtung besteht.

7. Vorrichtung gemäß der Ansprüche 1 oder 2 und 3, **dadurch gekennzeichnet dass** die spezifische Stapelvorrichtung (D) für Kisten halber Größe (2y) im oberen Bereich zwei seitliche parallele, horizontal bewegliche (6h) Mensolen (2c) für die Aufnahme und die gepaarte Anordnung zweier Kisten halber Größe (2y) aufweist, um deren reguläre Ablage auf der Ladeplattform (6a), bzw. oben auf dem Stapel, zu erreichen.

8. Verfahren zum getrennten Stapeln faltbarer Kisten voller Größe (2x) und halber Größe (2y) welche mittels einem Paar von Entnahmeförderbändern (3) oben von einem einzigen Stapel entnommen werden, welche schwenkbar (3a) gelagert sind um die Kisten (2x, 2y) zu ergreifen und vertikal bewegbar (3v) sind um die Kisten (2x, 2y) abzuheben, **dadurch gekennzeichnet, dass** nach dem Abheben (3v) der Kisten (2x, 2y) diese mit einer ersten Geschwindigkeit (V1) für eine Zeit (t1) bewegt werden so dass, im Fall von Kisten halber Größe (2y) die Abgabe der ersten Kiste an eine folgende Transfer- und Umlenkvorrichtung (C) erreicht wird, dass anschließend die zweite Kiste (2y) mit einer niedrigeren Geschwindigkeit (V2) bewegt wird oder, infolge einer kurzen Zeit (t3 - t2) der Verlangsamung oder des Stoppens der Geschwindigkeit, die Anfangsgeschwindigkeit (V1) für eine Zeit (t3 - t2) welche notwendig ist um die zweite Kiste (2y) von den Entnahmeförderbändern (3) an die besagte Transfer- und Umlenkvorrichtung (C), beabstandet zur ersten Kiste, abzugeben, wieder aufgenommen wird, dass die besagte Beabstandung durch eine Lichtschranke, durch Sonden oder durch eine Kamera erhoben wird und dass die Transfer- und Umlenkvorrichtung (C) spezifische Stapelvorrichtungen, bzw. spezifische Bearbeitungsmaschinen, beschickt.

## Claims

1. An apparatus for separately stacking full-size foldable crates (2x) and half-size foldable crates (2y), said apparatus comprising a pair of removal conveyor belts (3) for removing the full-size foldable crates (2x) and half-size foldable crates (2y) from the top of a single stack, the pair of removal conveyor belts being mounted pivotably (3a) in order to grip the crates (2x, 2y) and vertically lift (3v) them from the top of the stack, and further comprising a transferring and diverting device (C) as well as a photoelectric barrier (4), a colour detection sensor or a camera, wherein the crates (2x, 2y) gripped between the removal conveyor belts (3), after being lifted (3v), are moved (2a) by the removal conveyor belts (3) in the direction of the transferring and diverting device (C), **characterized in that** the apparatus is configured such that the movement (2a) takes place at a first speed (V1) for a time (t1) required to travel a distance that is equal to or slightly larger than the short side of a half-size crate (2y), followed by a movement at a speed (V2), which is lower than the first speed (V1), to travel a distance that is slightly larger than the short side of a half-size crate (2y), whereby, in the case of half-size crates (2y), the difference in transport speed brings about a spacing between the two crates (2y) as the latter are handed over to the transferring and diverting device (C), said spacing being detected by means of the photoelectric barrier (4), by means of a colour detection sensor or by means of a camera, which control the transferring and diverting devices (C) in order to move (5a) the crates (2x, 2y) to the specific stacking devices or the specific processing machines.

2. The apparatus according to claim 1, **characterized in that**, in order to obtain the spacing between the half-size crates (2y), as the latter are being handed over from the pair of removal conveyor belts (3) to the downstream transferring and diverting device (C), the speed (V1) of transport (2a), after a time (t1) required for conveyance by a distance that is equal to or slightly larger than the short side of the half-size crate (2y), is slowed or stopped for a short time in order then the speed for a time (t3 - t2) required for a transport distance that is just larger than the short side of the half-size crates (2y).

3. The apparatus according to claims 1 or 2, **characterized in that** the detection of the spacing between two half-size crates (2y) takes place immediately after the latter leave the removal belts (3), in the area of handover from the removal conveyor belts (3) to the downstream transferring and diverting device (C) or to the conveyor belt (5) or to the transporting element of the downstream transferring and diverting device (C).

4. The apparatus according to claims 1 or 2, **characterized in that** the transferring and diverting device (C) consists of a vertically pivotable (5n) conveyor belt (5) in order to be able, in one pivot position, to load one of the specific stacking devices (D) or a specific processing machine directly and to be able, in a second pivot position, to load the second specific stacking device or a specific processing machine by means of a further conveyor device (E).

5. The apparatus according to claims 1 or 2 and 4, **characterized in that** the specific stacking device (D) that is loaded directly by the transferring and diverting device (C) is provided below the transferring device (E) for loading the second specific stacking device.

6. The apparatus according to claims 1 or 2, **characterized in that** the transferring and diverting device (C) consists of a belt or transferring element with at least one lateral slider for laterally pushing away at least one type of crate (2x, 2y) toward a specific known stacking device.

7. The apparatus according to claims 1 or 2 and 3, **characterized in that** the specific stacking device (D) for half-size crates (2y) has, in the upper area, two lateral, parallel, horizontally movable (6h) shelves (2c) for receiving and arranging in pairs two half-size crates (2y), in order to evenly deposit these on the loading platform (6a) or on top of the stack.

8. A method for separately stacking full-size foldable crates (2x) and half-size foldable crates (2y) that are removed from the top of a single stack by means of a pair of removal conveyor belts (3) which are mounted pivotably (3a) in order to grip the crates (2x, 2y) and are vertically movable (3v) in order to lift the crates (2x, 2y), **characterized in that**, after the crates (2x, 2y) have been lifted (3v), said crates are moved at a first speed (V1) for a time (t1) such that, in the case of half-size crates (2y), the first crate is deposited on a downstream transferring and diverting device (C), **in that** the second crate (2y) is then moved at a lower speed (V2) or, after a short time (t3 - t2) of slowing or stopping the speed, the initial speed (V1) is resumed again for a time (t3 - t2) required for the second crate (2y) to be deposited by the removal conveyor belts (3) on said transferring and diverting device (C), at a spacing from the first crate, **in that** said spacing is detected by a photoelectric barrier, by sensors or by a camera, and **in that** the transferring and diverting device (C) loads specific stacking devices or specific processing machines.

## Revendications

1. Dispositif pour empiler séparément des caisses pliables de pleine taille (2x) et de demi-taille (2y), comprenant une paire de convoyeurs de prélèvement (3) pour prélever les caisses pliables de pleine taille (2x) et de demi-taille (2y) du sommet d'une pile unique, la paire de convoyeurs prélèvement étant montée de manière pivotante (3a) pour prélever les caisses (2x, 2y) et les soulever verticalement (3v) du sommet de la pile, et comprenant en outre un dispositif de transfert et de renvoi (C) ainsi qu'une barrière lumineuse (4), un capteur de reconnaissance de couleur ou une caméra, les caisses (2x, 2y) saisies entre les convoyeurs de prélèvement (3) étant, après leur soulèvement (3v), déplacées (2a) par les convoyeurs de prélèvement (3) en direction du dispositif de transfert et de renvoi (C),
**caractérisé en ce que**
le dispositif est configuré de telle sorte que le mouvement (2a) s'effectue à une première vitesse (V1) pendant un temps (t1) nécessaire pour parcourir une distance égale ou légèrement supérieure au petit côté d'une caisse de demi-taille (2y), suivi d'un mouvement à une vitesse (V2) inférieure à la première (V1) pour parcourir une distance légèrement supérieure au petit côté d'une caisse de demi-taille (2y), ce qui, du fait de la différence de vitesse de transport, provoque, pour les caisses de demi-taille (2y), lors du transfert vers le dispositif de transfert et de renvoi (C), un espacement entre les deux caisses (2y), détecté par la cellule photoélectrique (4), par le capteur de reconnaissance de couleur ou par une caméra, qui commande le dispositif de transfert et de renvoi (C) pour le déplacement (5a) des caisses (2x, 2y) vers les dispositifs d'empilage spécifiques, respectivement les machines de traitement spécifiques.

2. Dispositif selon la revendication 1, **caractérisé en ce que**, pour obtenir l'espacement entre les caisses de demi-taille (2y), pendant le transfert de la paire de convoyeurs de prélèvement (3) au dispositif de transfert et de renvoi (C) placé en aval, la vitesse (V1) du transport (2a), après un temps (t1) nécessaire au transport sur une distance égale ou légèrement supérieure au petit côté de la caisse de demi-taille (2y), est ralentie ou arrêtée pendant un court instant, puis, la vitesse est maintenue pendant un temps (t3 - 12) nécessaire au transport sur une distance légèrement supérieure au petit côté des caisses de demi-taille (2y).

3. Dispositif selon les revendications 1 ou 2, **caractérisé en ce que** la détection de l'espacement entre deux caisses de demi-taille (2y) est effectuée immédiatement après d'être sortie des convoyeurs de prélèvement (3), dans la zone de transfert des convoyeurs de prélèvement (3) au dispositif de transfert et de renvoi placé en aval (C) ou au convoyeur (5) ou à l'organe de transport du dispositif de transfert et de renvoi placé en aval (C).

4. Dispositif selon les revendications 1 ou 2, **caractérisé en ce que** le dispositif de transfert et de renvoi (C) est constitué d'un convoyeur (5) pivotant verticalement (5n) pour pouvoir, dans une position de pivotement, alimenter directement l'un des dispositifs d'empilage spécifiques (D), respectivement une machine de traitement spécifique, et dans la deuxième position de pivotement, alimenter le deuxième dispositif spécifique d'empilage, respectivement une machine de traitement spécifique, au moyen d'un autre convoyeur (E).

5. Dispositif selon les revendications 1 ou 2 et 4, **caractérisé en ce que** le dispositif spécifique d'empilage (D), qui est alimenté directement par le dispositif de transfert et de renvoi (C), est prévu sous le dispositif de transfert (E) pour l'alimentation du deuxième dispositif d'empilage spécifique.

6. Dispositif selon les revendications 1 ou 2, **caractérisé en ce que** le dispositif de transfert et de renvoi (C) est constitué par une courroie ou un organe de transfert comportant au moins un poussoir latéral pour l'évacuation latérale d'au moins un type de caisses (2x, 2y) vers un dispositif d'empilage spécifique connu.

7. Dispositif selon les revendications 1 ou 2 et 3, **caractérisé en ce que** le dispositif spécifique d'empilage (D) de caisses de demi-taille (2y) comporte en partie supérieure deux mensoles (2c) latérales parallèles, mobiles horizontalement (6h), pour la réception et 1a disposition appariée de deux caisses de demi-taille (2y) afin d'obtenir leur placement régulier sur le plateau de chargement (6a), respectivement au sommet de la pile.

8. Procédé pour empiler séparément des caisses pliables de pleine taille (2x) et de demi-taille (2y) qui sont prélevées du sommet d'une pile unique au moyen d'une paire de convoyeurs de prélèvement (3) qui sont montés de manière pivotante (3a) pour saisir les caisses (2x, 2y) et sont mobiles verticalement (3v) pour soulever les caisses (2x, 2y), **caractérisé en ce qu'**après le soulèvement (3v) des caisses (2x, 2y), celles-ci sont déplacées à une première vitesse (V1) pendant un temps (t1) tel que, dans le cas de caisses de demi-taille (2y), on obtient le transfert de la première caisse à un dispositif de transfert et de renvoi (C) placé en aval, qu'ensuite la deuxième caisse (2y) est déplacée à une vitesse inférieure (V2) ou, suite à un court temps (t3 - 12) de ralentissement ou d'arrêt de la vitesse, la vitesse initiale (V1 ) est rétablie pendant un temps (t3 - t2) nécessaire pour décharger la deuxième caisse (2y) des convoyeurs de prélèvement (3) audit dispositif de transfert et de renvoi (C) de façon espacé de la première caisse, **en ce que** ledit espacement est relevée par une cellule photoélectrique, par des sondes ou par une caméra et **en ce que** le dispositif de transfert et de renvoi (C) alimente des dispositifs d'empilage spécifiques ou des machines de traitement spécifiques.
